# EUROPEAN PATENT SPECIFICATION

(11) **EP 3 243 732 B1**
(45) Date of publication and mention of the grant of the patent: **26.06.2019**
(21) Application number: 15877139.4
(22) Date of filing: 24.04.2015
(51) Int. Cl.: B62K 9/02, B62K 21/00, B62K 21/12, B62K 21/24

(54) **TODDLER BIKE**
KLEINKINDFAHRRAD
VÉLO POUR TOUT-PETIT

(30) Priority: 09.01.2015 KR 20150003275
(43) Date of publication of application: 15.11.2017
(73) Proprietor: Kim, Gab Soo, Yeoju-si, Gyeonggi-do 469-105 (KR)
(72) Inventor: Kim, Gab Soo, Yeoju-si, Gyeonggi-do 469-105 (KR)
(74) Representative: BRP Renaud & Partner mbB Rechtsanwälte Patentanwälte Steuerberater
(86) International application number: PCT/KR2015/004105
(87) International publication number: WO 2016/111419

(56) References cited:
- WO-A1-2011/007054
- WO-A1-2013/024403
- JP-A- 2006 298 161
- JP-A- 2006 298 161
- KR-B1- 101 342 213
- KR-B1- 101 342 213
- KR-U- 20140 001 979
- US-B1- 6 685 207

## Description

### [Technical Field]

The present invention relates to a toddler bike, and more particularly, to a toddler bike which can be independently steered by a toddler riding at the front or by a guardian from behind.

### [Background Art]

In general, toddler bikes are implemented in the form of tricycles and are widely used for toddler transportation or physical activities of toddlers.

A toddler bike is disclosed in Korean Utility Model No. 20-0231562, "Multifunctional tricycle for baby". This type of conventional toddler bike may apply excessive load to the steering wire if the toddler attempts to manipulate the handlebar in a direction other than the direction in which the guardian intends to steer the tricycle while the guardian controls the steering direction using a rear steering bar. Thereby, the steering wire may twist and even break if such a situation is repeated. In addition, since the steering wire made of metal is exposed to the outside, the toddler may be injured thereby.

The applicant of this application has continued research on toddler bikes in order to solve such a problem. As a result, the applicant has obtained a patent for a toddler bike which can solve the above-mentioned problem (Korean Patent no. 1342213). The present applicant's prior patent discloses a toddler bike which can independently implement a case in which the toddler controls the steering through the handlebar and a case in which the guardian controls the steering through the rear steering bar without the conventional steering wire configuration. KR 101 342 213 B1 is considered the closest prior art document, and discloses all of the features of the preamble of claim 1.

However, Korean Patent No. 1342213 has a disadvantage in that it is somewhat inconvenient to use because steering the bike requires the user to press and rotate a regulation lever by a predetermined angle to manipulate a front steering part or a rear steering part.

Accordingly, the present applicant has continued research and development of an improved toddler bike which is easier to use from the perspective of the user than Korean Patent No. 1342213, and the present invention has been made in view of other problems of the conventional art.

### [Disclosure]

### [Technical Problem]

Therefore, the present invention has been made to improve the previous patent of the applicant while solving the problems of the prior art described above, it is an object of the present invention to provide a toddler bike which improves user convenience by making it easier to select a mode in which the toddler steers the bike through the front handle or a mode in which the guardian steers the bike through the rear steering bar.

It is another object of the present invention to provide an improved toddler bike which can be easily folded to reduce the volume thereof for storage.

### [Technical Solution]

In accordance with one aspect of the present invention, provided is a toddler bike including: a main body part 101 including a main body frame 102, a front wheel coupling rod 103 coupled to a front end of the main body frame 102, and a rear steering part 105 disposed at a rear end of the main body frame 102; a front wheel part 120 disposed at a lower portion of the front wheel coupling rod 103; a rear wheel part 130 having a pair of rear wheels 133 disposed at a rear lower portion of the main body part 101; a front wheel cover part 150 coupled between the front wheel part 120 and the front wheel coupling rod 103; a front steering part 170 disposed at an upper portion of the front wheel coupling rod 103 to control steering; a steering regulation part 160 disposed between the front wheel cover part 150 and the lower portion of the front wheel coupling rod 103, arranged to be operatively connected according to steering of the front steering part 170, and configured to regulate transmission of the steering of the front steering part 170 to the front wheel part 120; and a seat part 180 detachably coupled to the rear steering part 105, wherein the front wheel part 120 includes: a front wheel 123; a front wheel support frame 121 rotatably supporting the front wheel 123; and a connecting shaft 127 protruding from an upper portion of the front wheel support frame 121 and having a ring-shaped groove 127a formed along an outer circumference thereof, wherein the front wheel cover part (150) includes: a cover body 151 fixed to an upper end of the front wheel support frame 121 to cover an upper portion of the front wheel part 120; a steering connection rod 153 extending upward from the cover body 151, having a pair of button movement grooves 153a vertically formed on both sides of an upper portion of an outer circumferential surface thereof, and arranged such that the connecting shaft 127 protrudes from an upper portion of the steering connection rod 153; a pair of lifting/lowering buttons 154 inserted into the pair of button movement grooves 153a and disposed to vertically movable; a pair of elastic members 155 provided between a bottom surface of the pair of button movement grooves 153a and a lower portion of the pair of lifting/lowering buttons 154 to elastically support the pair of lifting/lowering buttons 154; a switching lever 157 formed in a cylindrical shape so as to surround the upper portion of the outer circumferential surface of the steering connection rod 153, arranged to be rotatable with respect to the steering connection rod 153, and causing the pair of lifting/lowering buttons 154 to vertically move according to a rotation operation thereof such that an upper portion of the pair of lifting/lowering buttons 154 selectively protrudes from an upper portion of the steering connection rod 153; and a cover plate 156 formed in a disk shape and coupled to an upper surface of the steering connection rod 153 to prevent the switching lever 157 from being displaced upward from the steering connection rod 153, the cover plate 156 allowing the connecting shaft 127 to protrude upward from a center thereof and being provided with a pair of through holes 156a through which upper portions of the pair of lifting/lowering buttons 154 pass, wherein the steering regulation part 160 includes: a cover coupling base 161 disposed in contact with an upper surface of the cover plate 156 and having a pair of lifting/lowering button accommodation grooves 162 into which the pair of lifting/lowering buttons 154 are raised and inserted; and an insertion tube 163 extending upward from the cover coupling base 161 and coupled with the front steering part 170, wherein, when the switching lever 157 is rotated in one direction, the pair of lifting/lowering buttons 154 is raised and inserted into the lifting/lowering button accommodation grooves 162 to restrict rotation of the front wheel cover part 150 with respect to the steering regulation part 160 such that the steering of the front steering part 170 is transmitted to the front wheel part 120, wherein, when the switching lever 157 is rotated in an opposite direction, the pair of lifting/lowering buttons 154 is lowered and separated from the lifting/lowering button accommodation groove 162 such that the front wheel cover part 150 is released from restriction of rotation with respect to the steering regulation part 150 to be freely rotatable to allow steering of the rear steering part 105.

Each of the lifting/lowering buttons 154 may include: a button body 154a formed in a rectangular box shape and provided with inclined surfaces formed on both sides of an upper portion thereof, the button body 154a being inserted into the button movement groove 153a and vertically movable; and a pin member 154b vertically arranged through the button body 154a and selectively inserted into the lifting/lowering button accommodation groove 162 according to vertical movement of the button body 154a, wherein the switching lever 157 may include: a first guide groove 157a formed in an inner circumferential surface thereof at a first height and allowing an upper side surface of the button body 154a to be seated therein; a second guide groove 157b spaced a predetermined distance from the first guide groove 157a formed in the inner circumferential surface of the switching lever 157 at a position lower than the first height; and an sloped guide groove 157c formed in the inner circumferential surface of the switching lever 157 to connect the first guide groove 157a and the second guide groove 157b, wherein, when the switching lever 157 is rotated in the one direction, the button body 154a may be guided from the second guide groove 157b to the first guide groove 157a along the sloped guide groove 157c to rise such that the pin members 154b are inserted into the lifting/lowering button accommodation grooves 162, wherein, when the switch lever 157 is rotated in the opposite direction, the button body 154a may be guided from the first guide groove 157a to the second guide groove 157b along by the sloped guide groove 157c to be lowered such that the pin members 154b are released from the lifting/lowering button accommodation grooves 162.

An outer circumferential surface of the switching lever 157 may be provided with an anti-slip projection 157e for preventing slippage when rotated by a user.

The cover coupling base 161 and the insertion tube 163 may be provided with a coupling shaft insertion hole 164 penetrating a center thereof, wherein the steering regulation part 160 may include: an insertion slit 161a formed to pass inward from an outer circumferential surface of the cover coupling base 161 through the connecting shaft insertion hole 164; a displacement prevention piece 167 inserted into the insertion slit 161 so as to be movable forward and backward and provided with a locking hole 167a entering into the coupling shaft insertion hole 164 according to forward or backward movement of the displacement prevention piece 167 and a spring accommodation hole 167b spaced backward from the locking hole 167a by a predetermined distance, a rear end of the displacement prevention piece 167 being provided with a push portion 167c to be pushed by the user; an elastic spring 168 formed in the spring accommodation hole 167b; and a fixing member 169 formed to penetrate the cover coupling base 161 so as to protrude from a lower surface of the cover coupling base 161 into the spring accommodation hole 167b to support one end of the elastic spring 168, wherein, when the user does not apply external force to the push portion, a rim of the locking hole 167a may enter into the connecting shaft insertion hole 164 and be inserted into the ring-shaped groove 127a of the connecting shaft 127 inserted into the connecting shaft insertion hole 164 such that the connecting shaft 127 is prevented from being displaced from the cover coupling base 161, and the front wheel cover part 150 is not separated from the steering regulation part 160, while the front wheel part 120 and the front wheel cover part 150 are rotatable about the connecting shaft 127 with respect to the steering regulation part 160, wherein, when the user pushes the push portion, the rim of the locking hole 167a may not enter into the connecting shaft insertion hole 164, and the connecting shaft 127 may be separated from the connecting shaft insertion hole 164.

The rear wheel part 130 may include: a pair of rotation support members 131 installed to rotatably support the pair of rear wheels 133 inside each of the pair of rear wheels 133; and a horizontal bar 135 connecting the pair of rotation support members 131 to each other, wherein the main body part 101 may further include: a pair of first support frames 106 having a front end hinged to both sides of a lower portion of the rear steering part 105 and a rear end hinged to a front end portion of the pair of rotation support members 131; a pair of second support frames 107 hinged to a rear end portion of the pair of first support frames 106; an upper bracket 109 formed at a rear end of the main body frame 102 so as to be inclined and having an upper end coupled with a middle portion of a lower end of the rear steering part 105, the upper bracket 109 including a pair of coupling pins 108 projected and retracted through a lower portion thereof; a lower bracket 111 hinged to a front end of the pair of second support frames 107 on both sides thereof and having a front surface provided with a pair of pin insertion holes 110 allowing the pair of coupling pins 108 to be inserted thereinto; and a connecting piece 112 having opposite ends hinged to the upper bracket 109 and the lower bracket 111, wherein, when the pair of coupling pins 108 is inserted into the pair of pin insertion holes 110 and the upper bracket 109 is coupled to the lower bracket 111, the rear steering part 105, the pair of first support frames 106, the pair of second support frames 107, the upper bracket 109, the lower bracket 111 and the connecting piece 112 may be unfolded such that the main body part 101 is usable, wherein, when the pair of coupling pins 108 is separated from the pair of pin insertion holes 110 and the upper bracket 109 is decoupled from the lower bracket 111, the rear steering part 105, the pair of first support frames 106, the pair of second support frames 107, the upper bracket 109, the lower bracket 111 and the connecting piece 112 may be folded such that the main body part 101 has a reduced volume for storage compared to the usable state.

The main body part 101 may further include: a pair of pulling buttons 114 formed on both sides of an upper portion of the rear steering part 105 and arranged to be movable along the rear steering part 105; a pair of wires 116 installed inside the upper bracket 109 and the rear steering part 105 to connect the pair of coupling pins 108 to the pair of pulling buttons 114; and a pair of coil springs 117 installed inside the upper bracket 109 and configured to be compressed when the pair of coupling pins 108 are moved backward to provide elastic force for returning the pair of coupling pins 108 to original protruding positions

The steering regulation part 160 may be configured to rotate with respect to the front wheel coupling rod 103 within a limited rotation angle range such that a counterclockwise/clockwise steering angle range is limited by the front steering part 170.

### [Advantageous Effects]

As apparent from the fore-going, the toddler can directly steer the front wheel part through a front steering part by simply turning a ring-shaped regulation lever clockwise or counterclockwise, or the front wheel part can freely rotate like a caster by preventing the steering power of the front steering part from being transmitted to the front wheel part such that a guardian can perform steering using the rear steering part. Therefore, user convenience may be enhanced.

In addition, since the main body part can be easily folded for storage when the toddler bike of the present invention is not in use, the toddler bike can be carried in the trunk of a vehicle.

Further, according to embodiments of the present invention, the front wheel part including the front cover part can be easily removed simply by pressing the pushing part of a displacement prevention piece. Thus, the front wheel part can be easily stored separately.

### [Description of Drawings]

FIG. 1 is a perspective view showing a toddler bike according to an embodiment of the present invention.
FIG. 2 is a perspective view showing the toddler bike with the seat part of FIG. 1 removed.
FIG. 3 is a view illustrating a part of the internal configuration of the main body part of a toddler bike according to an embodiment of the present invention.
FIG. 4 is a perspective view showing the toddler bike of FIG. 2 that is folded for storage.
FIG. 5 is a perspective view showing the toddler bike of FIG. 1 with a front wheel cover part separated from a front coupling rod.
FIG. 6 is an exploded perspective view showing components of the front part of the toddler bike shown in FIG. 1.
FIG. 7 is a rear view showing the steering regulation part of FIG. 1,
FIG. 8 is a view illustrating a rotation range of the steering regulation part with respect to the front wheel coupling rod of FIG. 1.
FIG. 9 is a cross-sectional view schematically showing an internal configuration of the steering regulation part of FIG. 1.
FIG. 10 is an enlarged perspective view showing the displacement prevention piece of FIG. 7.
FIG. 11 is an enlarged perspective view showing the front wheel cover part of FIG. 1.
FIG. 12 is a perspective view illustrating a configuration with the cover plate of FIG. 11 removed.
FIG. 13 is a perspective view showing the switching lever of FIG. 12.
FIG. 14 is a perspective view showing the switching lever and the lifting/lowering button of FIG. 12,
FIG. 15 is a view schematically illustrating installation of the lifting/lowering button in the button movement groove of the steering connection rod of FIG. 12.

### [Best Mode]

The above and other objects, features and advantages of the present invention will become more apparent from the following description of preferred embodiments with reference to the accompanying drawings. However, the present invention is not limited to the embodiments described herein but may be embodied in other forms. Rather, the embodiments disclosed herein are provided so that this disclosure will be thorough and complete.

In this specification, when an element is referred to as being on another element, it may be directly formed on another element, or a third element may be interposed therebetween. In the drawings, the thicknesses of the components are exaggerated for effective description of the technical details.

Embodiments described herein will be described with reference to cross-sectional views and/or plan views that are ideal exemplary views of the present invention. In the drawings, the thicknesses of the films and regions are exaggerated for effective description of the technical details. Thus, the exemplary views may be modified according to manufacturing techniques and/or tolerances. Accordingly, the embodiments of the present invention are not limited to the specific shapes as shown but may include changes of shapes produced according to the manufacturing process. For example, the etched areas illustrated as being formed at a right angle may be rounded or have a shape with a certain curvature. Thus, the regions illustrated in the figures have attributes, and the shapes of the regions illustrated in the figures are intended to illustrate specific forms of the regions of the elements and are not intended to limit the scope of the invention. Although the terms first, second, etc. in various embodiments of the present disclosure are used to describe various components, these components should not be limited by these terms. These terms have only been used to distinguish one component from another. The embodiments described and exemplified herein include their complementary embodiments.

The terminology used herein is for the purpose of illustrating embodiments and is not intended to limit the present invention. In this specification, the singular forms include plural forms unless specifically stated otherwise. The terms "comprises" and/or "comprising" used in the specification do not exclude presence or addition of one or more other elements.

In describing the specific embodiments below, various specific contents have been set forth in order to explain the invention in more detail and to provide better understanding of the invention. However, it will be appreciated by those skilled in the art that the present invention can be used even without such specific details. In some instances, it should be noted that portions of the invention that are commonly known and are not significantly related to the invention are not described for clarity.

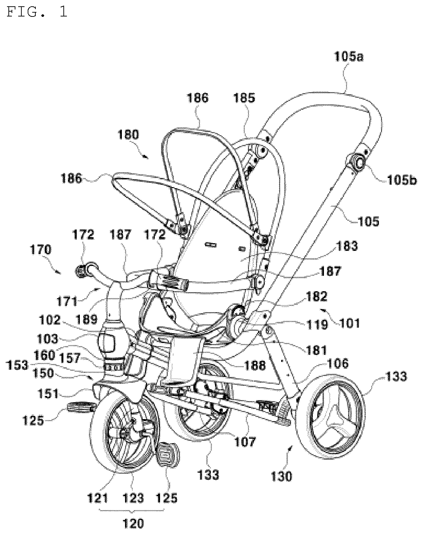

Hereinafter, a toddler bike according to an embodiment of the present invention will be described with reference to FIGS. 1 to 15.

FIG. 1 is a perspective view showing a toddler bike according to an embodiment of the present invention. A toddler bike 100 according to the present invention is implemented in the form of a tricycle such that the toddler who cannot reach the pedal 125 can travel stably.

Referring to FIGS. 1 to 4, the toddler bike of the present invention includes a main body part 101 forming the frame of the bike and including a rear steering part 105 provided to an rear upper portion of the toddler bike to allow a guardian to steer the toddler bike, a front wheel part 120 disposed at a front lower portion of the main body part 101, a rear wheel part 130 disposed at a rear lower portion of the main body part 101, a front wheel cover part 150 disposed at an upper portion of the front wheel part 120, a steering regulation part 160 disposed between the front wheel cover part 150 and the main body part 101 to transmit only one of the steering rotations of the front steering part 170 and the rear steering part 105 to the front wheel part 120, and a front steering part 170 disposed at a front upper portion of the main body part 101 and operated for steering by the toddler.

The main body part 101 supports the respective components to be coupled with each other to stably perform the traveling process. The main body part 101 includes a main body frame 102, a front wheel coupling rod 103 vertically coupled to the front of the main body frame 111, a rear steering part 105 inclined and disposed at the rear end of the main body frame 102, a pair of support frames 106 having front ends hinge-connected to both side of the lower portion of the rear steering part 105 and rear ends installed on the rear wheel part 130 in a hinged manner, a pair of second support frames 107 having rear ends hinged to a lower end portion of the first support frames 106, and an upper bracket 109 inclined and coupled to the rear end of the main body frame 102 and having an upper end coupled with a middle portion of the lower end of the rear steering part 105, a lower bracket 111 hinge-connected to the front ends of the pair of second support frames 107 on both sides thereof and having a front end detachably coupled to the upper bracket 109 in a pin manner, and a connecting piece 112 having opposite ends hinged to the upper bracket 109 and the lower bracket 111.

The main body frame 111 is formed in the shape of a rod having a predetermined length, and is arranged laterally at a predetermined angle.

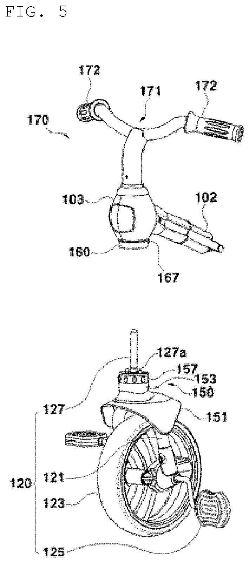

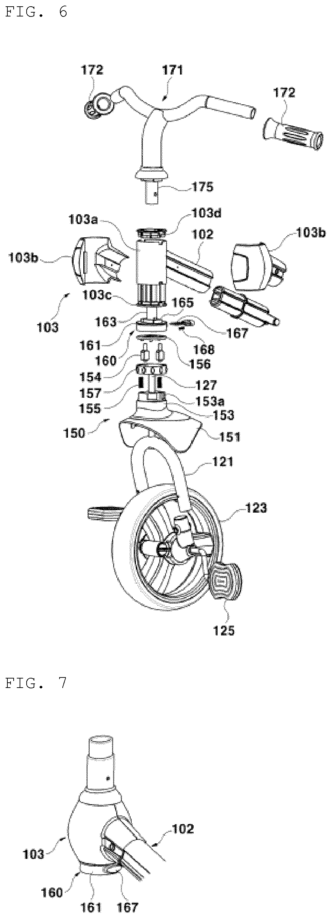

Referring to FIGS. 5 and 6, the front wheel coupling rod 103 is coupled to the front end of the main body frame 111, the front steering part 170 is rotatably installed at an upper portion of the front wheel coupling rod, and the steering regulation part 160 is rotatably installed at a lower portion of the front wheel coupling rod. The lower end portion of the front steering part 170 is inserted into the upper portion of the front wheel coupling rod 103 and the upper portion of the steering regulation part 160 is inserted into the lower portion of the front wheel coupling rod 103 such that the lower end portion of the front steering part 170 and the upper portion of the steering regulation part 160 are coupled. Thereby, the front steering part 170 and the steering regulation part 160 are arranged to be rotatable with respect to the front wheel coupling rod 103, and the steering regulation part 160 is engaged with the front steering part 170 to rotate counterclockwise and clockwise about the front wheel coupling rod 103 according to steering of the front steering part 170.

The front wheel coupling rod 103 includes a cylindrical front wheel coupling rod body 103a vertically coupled to the front end of the main body frame 102 and having open upper and lower portions, a pair of protective cases 130b surrounding the outer side of the front wheel coupling rod body 103a, a fixed hollow cylindrical portion 103c fixed by being inserted into the open lower portion of the front wheel coupling rod body 103a and allowing the upper portion of the steering regulation part 160 to be inserted thereinto, and a cap 103d coupled to an upper portion of the front wheel coupling rod body 103a. However, the present invention is not limited to this configuration. The front wheel coupling rod 103 may be formed in a cylindrical shape to allow the lower end portion of the front steering part 170 and the upper portion of the steering regulation part 160 to be inserted thereinto so as to be coupled. Thereby, the front steering part 170 is coupled to be rotatable with respect to the front wheel coupling rod 103. Any configuration is acceptable so long as the steering regulation part 160 can be engaged according to steering of the front steering part 170.

Meanwhile, the front steering part 170 of the present invention is limited so as to rotate counterclockwise and clockwise with respect to the front wheel coupling rod 103 only within a certain angular range. Details will be described later.

The rear steering part 105 is formed in a rectangular shape and is coupled to an upper end of the upper bracket 109 inclined and coupled to the rear end of the main body frame 102 such that the rear steering part 105 has the same inclination as the upper bracket 100.

Referring to FIGS. 1 to 3, the upper portion of the rear steering part 105 is provided with a rear grip 105a allowing a guardian to steer the bike from behind. The rear grip 105 is adjustable in angle with respect to the lower portion of the rear steering part 105. That is, the push button 105b formed at the lower end of the rear grip 105a may be pressed to adjust the rear grip 105a to a predetermined angle, and then the external force applied to the push button 105b may be removed to fix the rear grip 105a at the adjusted angle.

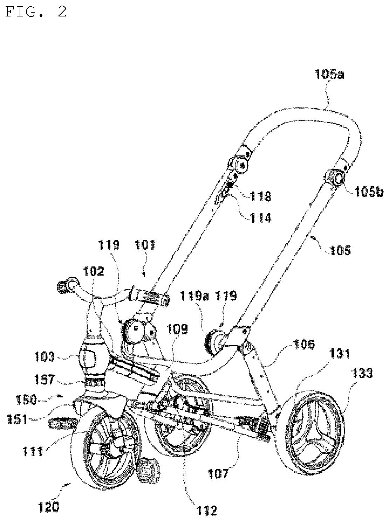

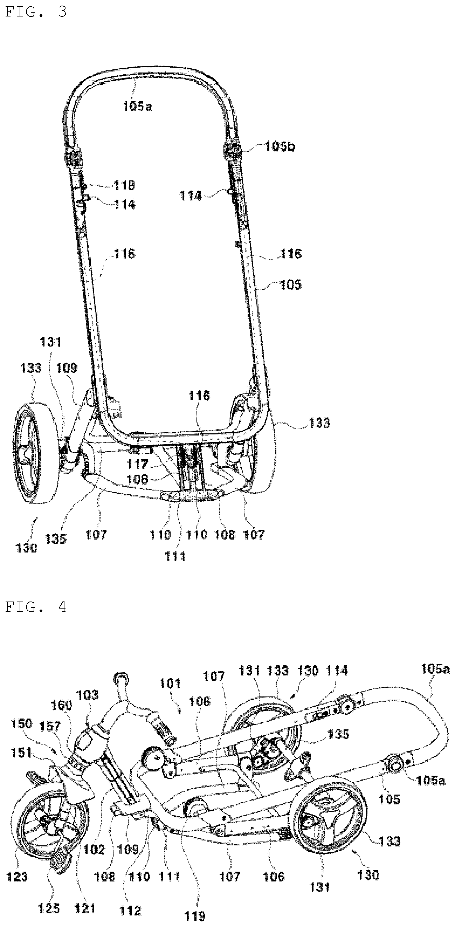

The body 101 of the present invention is configured to be unfolded for use as shown in FIG. 2 or folded as shown in FIG. 4 to be easily stored in a vehicle or a storage with the volume reduced compared with the usable form.

Specifically, a pair of coupling pins 108 is installed so as to protrude through the lower portion of the upper bracket 109, and a pair of pin insertion holes 110 into which the coupling pins 108 can be inserted is formed in the front surface of the lower bracket 111.

The main body part 101 further includes pulling buttons 114, wires 116, and coil springs 117 to allow the user to control protrusion and depression of the coupling pins 108. The pulling button 114 is installed on both sides of the upper portion of the rear steering unit 105. The pulling button 114 is installed to be movable at predetermined intervals along the rear steering part 105.

The pair of wires 116 is installed inside the upper bracket 109 and the rear steering part 105 and is arranged to connect the pair of coupling pins 108 and the pair of pulling buttons 114, respectively.

The pair of coil springs 117 is installed inside the upper bracket 109 and provides elastic force by being compressed when the pair of coupling pins 108 moves backward into the upper bracket 109, in order to return the coupling pins 108 to the original position where the coupling pins 108 protrude from the upper bracket 109. Therefore, when the user pulls the pair of pulling buttons 114 backward, the pair of wires 116 pulls the coupling pins 108 such that the coupling pins 108 enter into the upper bracket 109. At this time, the pair of coil springs 117 is compressed, producing elastic force for returning the pair of coupling pins 108 to the original position thereof. If the user removes the external force at this time, the pair of coupling pins 108 will be returned to the original position thereof by the elastic force of the coil spring 117, protruding from the upper bracket 109, and the pulling buttons 114 also return to the original positions thereof.

As shown in FIG. 2, in the main body part 101 of the present invention configured as above, the main body frame 102, the rear steering part 105, a pair of first support frames 106, a pair of second support frames 107, the upper bracket 109, the lower bracket 111 and the connecting piece 112 are unfolded such that the coupling pins 108 are inserted into the pin insertion holes 110 while protruding from the upper bracket 109. Thereby, the upper bracket 109 is coupled to the lower bracket 111 such that the main body part 101 is maintained in the unfolded state. In this case, the seat part 180 can be mounted on the rear steering part 105.

When the user folds the main body part 101 in the state of FIG. 2 as shown in FIG. 4, the user pulls the pair of pulling buttons 114 to release the coupling pins 108 from the pin insertion holes 110 and release the upper bracket 109 from the lower bracket 111. At this time, if the rear steering part 105 is pushed, the main frame 102, the rear steering part 105, the pair of first support frames 106, the pair of second support frames 107, the upper bracket 109, the lower bracket 111, and the connecting piece 112 may be folded so as to have a reduced volume for storage.

Although it is illustrated that the pair of pulling buttons 114 is pulled to draw the coupling pins 108 into the upper bracket 109, the present invention may be provided with a restriction button 118 for prohibiting or allowing movement of the pulling buttons 114 in order to selectively restrict the pulling operation of the pulling buttons 114. The restriction button 118 is arranged on one side of the rear steering part 105 so as to be positioned adjacent to one of the pulling buttons 114. The present invention is configured to allow the pulling buttons 114 to be pulled backward while the restriction button 118 is depressed and to restrict backward pulling of the pulling button 114 when the restriction button 118 is not pressed.

Accordingly, when the restriction button 118 remains pressed, the user can pull the pair of pulling buttons 114 backward to draw the coupling pins 108 into the upper bracket 109 to fold the main body part 101 for storage.

Referring to FIGS. 1 to 6, the front wheel part 120 is disposed at the front lower portion of the main body part 101. The front wheel part 120 is moved in a direction in which steering force is applied through the front wheel coupling rod 103. The front wheel part 120 includes a front wheel 123, a front wheel support frame 121 coupled to the rotational shaft of the front wheel 123 to rotatably support the front wheel 123, a pedal 125 coupled to the rotational shaft of the front wheel 123 to rotate the front wheel 123, and a connecting shaft 127 protruding upward from the front wheel support frame 121 and having a ring-shaped groove 127a formed along an outer circumferential surface thereof. The connecting shaft 127 is accommodated in the steering regulation part 160 through the front wheel cover part 150.

The rear wheel part 130 is disposed at the rear lower portion of the main body part 101. The rear wheel part 130 includes a pair of rear wheels 133 spaced apart from each other, a pair of rotation support members 131 arranged inside of each of the pair of rear wheels 133 to rotatably support the pair of rear wheels 133, and a horizontal bar 135 for connecting the rotation support members 131 to each other.

The rear ends of the pair of first support frames 106 are hinge-connected to the front ends of the pair of rotation support members 131. Both ends of the horizontal bar 135 connect the rear ends of the pair of rotation support members 131.

According to the present invention, a coil spring (not shown) may be provided to connect the rear ends of the pair of first support frames 106 and the rear ends of the pair of rotation support members 131. Thereby, when the bike travels, vibration or shock applied to the rear wheel part 130 and transmitted to the main body part 101 may be attenuated. Thereby, riding comfort may be improved for the toddler.

The front wheel cover part 150 and the steering regulation part 160 are disposed between the front wheel coupling rod 103 and the front wheel part 120 to selectively transmit the steering force of the front steering part 170 to the front wheel part 120. Thereby, steering of the front steering part 170 and steering of the rear steering part 140 are independently performed.

Hereinafter, the configuration and operation of the front wheel cover part 150 and the steering regulation part 160 of the present invention will be described in detail with reference to FIGS. 5 to 15.

Referring to FIGS. 6 and 11 to 14, the front wheel cover part 150 includes a cover body 151, a steering connection rod 153, a lifting/lowering button 154, an elastic member 155, a switching lever 157, and a cover plate 156.

The cover body 151 is fixedly coupled to the front wheel support frame 121 to cover an upper portion of the front wheel 123 and a steering connection rod 153 is formed at an upper end thereof in an extending manner. The cover body 151 covers the upper portion of the front wheel 123 to prevent the toddler's feet from contacting the front wheel 123.

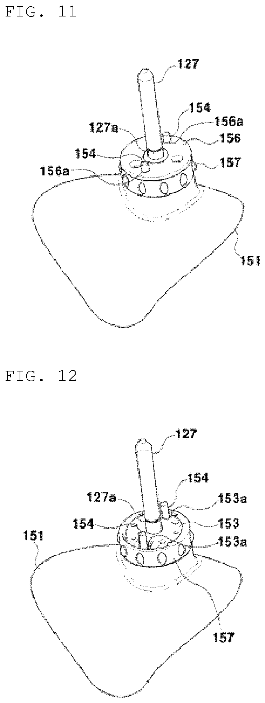

The steering connection rod 153 is formed in the shape of a rod having a predetermined diameter and is detachably coupled with the steering regulation part 160 such that the steering direction is transmitted to the front wheel support frame 121. A connecting shaft 127 passing through the cover body 151 is formed at the center of the steering connection rod 153 so as to protrude upward. Here, a ring-shaped groove 127a is formed in a lower portion of the connecting shaft 127, as shown in FIG. 11.

The outer circumferential surfaces on both sides of the steering connection rod 153 are provided with a pair of button movement grooves 153a vertically formed to face each other.

The lifting/lowering button 154 includes a button body 154a and a pin member 154b vertically arranged through the button body 154a. The button body 154a is formed in a box shape, and has inclined surfaces formed on both sides of the upper portion thereof. The button body 154a is inserted into the button movement groove 153a to be vertically movable.

The pin member 154b is arranged through the button body 154a to protrude upward and downward from the button body 154a, and is vertically moved when the button body 154a vertically moves along the button movement groove 153a. When the button body 154a rises, the pin member 154b protrudes upward from the cover plate 156 and is inserted into a lifting/lowering button accommodation groove 162 formed in the lower surface of the cover coupling base 161 of the steering regulation part 160. When the button body 154a is lowered, the pin member 154b descends downward from the button movement groove 153a so as not to protrude upward from the cover plate 156, and is thus displaced from the lifting/lowering button accommodation groove 162.

The elastic member 155 includes a coil-type spring, and is provided between the bottom surface of the button movement groove 153a and the lower portion of the pair of lifting/lowering buttons 154 to elastically support the pair of lifting/lowering buttons 154, as shown in FIG. 5.

The switching lever 157 is formed in the shape of a cylinder having an open top and bottom and is installed to be rotatable with respect to the steering connection rod 153 by surrounding the upper portion of the circumferential surface of the steering connection rod 153, and the pair of lifting/lowering buttons 154 is selectively moved upward or downward by rotation operation of the switching lever 157 to protrude upward from the steering connection rod 153 and the cover plate 156.

A pair of guide members 157a, 157b, and 157c is integrally formed on the inner circumferential surface of the switching lever 157 to lift and lower the lifting/lowering button 154 according to rotation of the switching lever 157. Each of the guide members 157a, 157b and 157c includes a first guide groove 157a, a second guide groove 157b, and a sloped guide groove 157c.

The first guide groove 157a is formed at a position having a first height on the inner circumferential surface of the switching lever 157 and has the same shape as the upper side surface of the button body 154a, so as to be seated on the upper side surface of the button body 154a.

The second guide groove 157b has the same shape as the first guide groove 157a and is formed at a lower position than the first height. The second guide groove 157b is spaced apart from the first guide groove 157a by a predetermined distance in the inner circumferential direction of the switching lever 157.

The sloped guide groove 157 is configured to connect the first guide groove 157a and the second guide groove 157b.

When the switching lever 157 is rotated in one direction, the button body 154a rises along the sloped guide groove 157c in the second guide groove 157b and is seated in the first guide groove 157a. Thereby, the pin member 154b is inserted into the lifting/lowering button accommodation groove 162.

On the other hand, when the switching lever 157 is rotated in the opposite direction, the button body 154b descends along the sloped guide groove 157c in the first guide groove 157a and is seated in the second guide groove 157b. In this case, the button body 154 is lowered to the lower portion of the button movement groove 153a and the pin member 154b is displaced from the lifting/lowering button accommodation groove 162. At this time, the elastic member 155 is compressed, generating an elastic force that causes the button body 154 to rise.

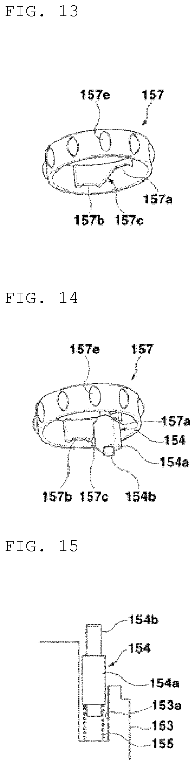

The outer circumferential surface of the switching lever 157 of the present invention is provided with an anti-slip projection 157e (see FIG. 13) to prevent slippage during user's turning operation.

The cover plate 156 is formed in a disk shape and is screw-coupled to the upper surface of the steering connection rod 153. The cover plate 156 is provided with a pair of through holes 156a through which the pin member 153a of the lifting/lowering button 154 passes. Thereby, the pin member 153a protrudes upward through the through hole 156a or enters the button movement groove 153a of the steering connection rod 153a. Further, the connecting shaft 127 protrudes upward from the center of the cover plate 156.

Referring to FIGS. 5 to 7, 9, and 10, the steering regulation part 160 includes a cover coupling base 161 formed in a cylindrical shape and an insertion tube 163 extending upward from the center of the cover coupling base 161.

The upper surface of the cover coupling base 161 is disposed in contact with the lower surface of the front wheel coupling rod 103, that is, the fixed cylindrical portion 103c of the front wheel coupling rod 103, and the lower surface thereof is disposed in contact with the upper surface of the cover plate 156 and is provided with a pair of lifting/lowering button accommodation grooves 162 into which the pair of lifting/lowering buttons 154 is lifted and inserted. The insertion tube 163 is coupled with the lower shaft 175 of the front steering part 170, such that the steering regulation part 160 is rotated in operative connection with steering of the front steering part 170.

According to an embodiment of the present invention, a coupling shaft insertion hole 164 is formed in the cover coupling base 161 and the insertion tube 163 to allow the coupling shaft 127 protruding upward from the front wheel cover part 150 to be inserted thereinto.

According to an embodiment of the present invention, a locking element is provided to prevent the connecting shaft 127 from being displaced from the connecting shaft insertion hole 164 by a simple user operation.

To this end, the steering regulation part 160 further includes an insertion slit 161a, a displacement prevention piece 167, an elastic spring 168, and a fixing member 169.

The insertion slit 161a is formed to pass inward from the outer circumferential surface of the cover coupling base 161 through the connecting shaft insertion hole 164.

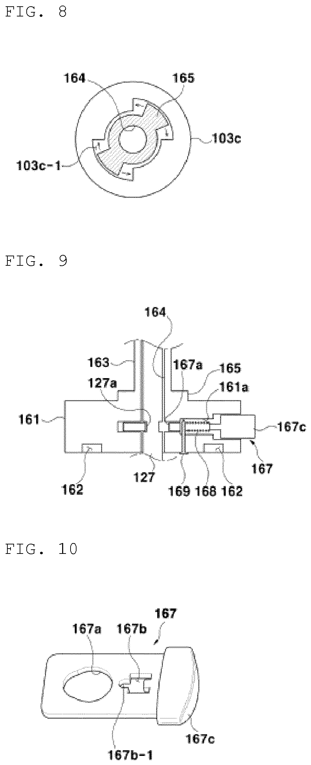

Referring to FIG. 10, the displacement prevention piece 167 is formed in the shape of a rectangular plate, a locking hole 167a is formed at one side thereof, and a push portion 167c to be pushed by the user is formed at the rear end of the displacement prevention piece. A spring accommodation hole 167b is formed between the push portion 167c and the locking hole 167a. Here, a fixing member insertion hole 167b-1 is formed at and connected to the front end of the spring accommodation hole 167b.

The displacement prevention piece 167 is inserted into the insertion slit 161a so as to be movable forward and backward. When the displacement prevention piece 167 is moved backward, a portion of the front end of the locking hole 167a moves into the area of the coupling shaft insertion hole 163. When the displacement prevention piece 167 is moved forward, the locking hole 167a is arranged out of the area of the coupling shaft insertion hole 163.

The elastic spring 168 includes a coil-type spring and is seated in the spring accommodation hole 167b.

The fixing member 169 includes a screw member and is formed so as to pass upward through the cover coupling base 161 from the lower surface of the cover coupling base 161 and protrude from the inner front end of the spring accommodation hole 167b, namely, into the fixing member insertion hole 167b-1 to support the front end of the elastic spring 168.

That is, when the user presses the push portion 167c to advance the displacement prevention piece 167, the elastic spring 168 is compressed with the elastic spring 168 supported by the fixing member 169, thereby generating elastic force that returns the displacement prevention piece 167 back to the original position thereof. Thereby, when the user removes the external force applied to the push portion 167c, the displacement prevention piece 167 is retracted by the elastic force of the elastic spring 168 and returned to the original position.

In the above configuration, when the user does not apply external force to the push portion 167c, the rim of the locking hole 167a enters into the area of the connecting shaft insertion hole 164 and is inserted into the ring-shaped groove 127a of the connecting shaft 127, which is inserted into the connecting shaft insertion hole 164. Thereby, the connecting shaft 127 is prevented from being displaced from the cover coupling base 161. Accordingly, the front wheel cover part 150 is not separated from the steering regulation part 160, and the front wheel part 120 and the front wheel cover part 150 are rotatable about the connecting shaft 127 with respect to the steering regulation part 160.

As shown in FIG. 5, if the user presses the push portion 167c to separate the front wheel cover part 150, which is integrally coupled to the front wheel part 120, from the steering regulation part 160, the rim of the locking hole 167a moves away so as not to enter into the area of the connecting shaft insertion hole 164 and thus the ring-shaped groove 127a of the connecting shaft 127 is displaced from the locking hole 167a. Thereby, the connecting shaft 127 is lowered along the coupling shaft insertion hole 164 by the weight of the front wheel part 120 and the front wheel cover part 150.

Referring to FIGS. 5 and 6, the front steering part 170 includes a handle frame 171 formed in a T shape and grip portions 172 formed at both ends of the handle frame 171.

A lower shaft 175 is provided at the lower end of the handle frame 171. The lower shaft 175 is inserted into the front wheel coupling rod 103 and is thus coupled with the insertion tube 163 inserted into the front wheel coupling rod 103.

According to an embodiment of the present invention, the front steering part 170 is rotatable counterclockwise and clockwise with respect to the front wheel coupling rod 103 to allow a toddler to grip the grip portion 172 and perform steering. The front steering part 170 is configured to be operatively connected with the steering regulation part 160. In addition, the front steering part 170 of the present invention is configured such that the angular range within which the front steering part 170 is rotated clockwise or counterclockwise with respect to the front wheel coupling rod 103 is limited.

To this end, referring to FIGS. 6 to 8, a rotation angle restricting member 165 is formed on the upper surface of the cover coupling base 161 so as to protrude in a fan shape in the opposite directions with respect to the insertion tube 163, and an accommodation chamber 103c-1 of a fan shape wider than the fan shape of the rotation angle restricting member 165 is formed on the lower surface of the fixed cylindrical portion 103c of the front wheel coupling rod 103 to accommodate the rotation angle restricting member 165. The rotation angle restricting member 165 is rotated while being accommodated in the accommodation chamber 103c-1. Thereby, the counterclockwise and clockwise rotations of the steering regulation part 160, i.e., the cover coupling base 161 are limited within a predetermined angle, and the counterclockwise and clockwise rotation range of the front steering part 170 connected therewith is limited. In an embodiment of the present invention, the counterclockwise and clockwise rotation angle range of the front steering part 170 may be set to 30 degrees. This serves to prevent an accident when a toddler who is not good at steering steers the bike using the front steering part 170. If the counterclockwise and clockwise rotation angle range is not limited, the toddler may steer the bike at a sharp radius and suffer an accident.

Referring to FIGS. 1 and 2, the seat part 180 includes a seat body 181 having a backrest portion 183. The seat body 181 is configured to be detachably mounted to a lower portion of the rear steering part 105.

Specifically, socket portions 119 are provided on both sides of the lower portion of the rear steering part 105, and fitting portions 182 formed on both sides of the seat body 181 may be inserted into the socket grooves 119a of the socket portions 119, thereby mounting the seat body 181 to the rear steering part 105.

In an embodiment of the present invention, the backrest portion 183 may be configured to be adjustable in angle with respect to the seat body 181.

In addition, the seat part 180 may be provided with a shading means detachably attached to the backrest portion 183. The shading means includes an arc-shaped shading screen support member 185 detachably mounted to the backrest portion 183, a pair of arc-shaped ancillary supports 185 configured to be rotated with respect to the shading screen support 185 to be unfolded or folded, and a shading screen (not shown) covering the shading screen support 185 and the ancillary supports 186.

Accordingly, when the ancillary supports 186 are rotated and unfolded with respect to the shading screen support 185, the shading screen (not shown) is unfolded, and thus the toddler can be protected from sunlight or rain. When the shading screen is not in use, the ancillary supports 186 can be rotated toward the shading screen support 185 so as to be folded. Here, the shading screen support 185 may be mounted on the backrest portion 183 in a socket-fitting manner.

In addition, the seat part 180 of the present invention may be provided with a footrest 188 detachably installed at the front of the seat body 181 in a fitting manner to support the feet of the toddler, and a front guard 187 for surrounding and protecting the front of the toddler. The front guard 187 may be configured such that both ends of the front guard 187 are formed at the lower ends of both sides of the shading screen support 185 so as to be rotated counterclockwise and clockwise. The center portion of the front guard 187 may be divided into two members as necessary, and the two members may be opened or wedged so that they can be coupled with each other.

Hereinafter, use of a toddler bike according to an embodiment of the present invention will be described with reference to the drawings.

Considering the age and physical condition of the toddler to use the toddler bike, the guardian can decide who should steer. The present invention selectively allows the toddler to directly control the steering through the front steering part 170 or the guardian to perform steering through the rear steering part 105.

When the guardian turns the regulation lever 157 clockwise from the position of FIG. 1, the button body 154a of the lifting/lowering button 154 rises in the second guide groove 157b along the sloped guide groove 157c and is seated in the first guide groove 157a. Thus, the pin member 154b is raised to protrude upward from the cover plate 156 and to be accommodated in the lifting/lowering button accommodation groove 162 formed in the cover coupling base 161 of the steering regulation part 160. Thereby, counterclockwise and clockwise rotation of the front wheel cover part 150 with respect to the steering regulation part 160 is restricted such that steering of the front steering part 170 is transmitted to the front wheel part 120. As a result, the toddler can directly steer the front wheel part 120 through the front steering part 170.

On the other hand, when the guardian turns the regulation lever 157 counterclockwise, the button body 154a of the lifting/lowering button 154 in the first guide groove 157a descends along the sloped guide groove 157c, and is seated in the second guide groove 157b. Thus, the pin member 154b is moved to the lower portion of the button movement groove 513a so as not to protrude upward from the cover plate 156 and is displaced from the lifting/lowering button accommodation groove (162). Thereby, the front wheel cover part 150 is released from restriction of counterclockwise and clockwise rotation with respect to the steering regulation part 160, and thus the front wheel part 120 functions as a caster wheel rotating freely like the front wheels of an ordinary baby carriage. Therefore, in this state, the guardian can grip the rear grip 105a of the rear steering part 105 and steer the bike in a desired direction.

According to an embodiment, the front wheel cover part 150 integrated with the front wheel part 120 may be separated from the steering regulation part 160 for storage as shown in FIG. 5. In this case, when the guardian presses the push portion 167c of the displacement prevention piece 167 exposed to the cover coupling base 161, the locking hole 167a leaves the area of the coupling shaft insertion hole 164, and thus the ring-shaped groove 127a of the connecting shaft 127 is released from the locking hole 167a and thus withdrawn from the connecting shaft inserting hole 164 of the steering regulation part 160.

According to an embodiment of the present invention, when the guardian pulls the pair of pulling buttons 114, the coupling pins 108 are drawn into the upper bracket 109, leaving the pin insertion holes 110. At this time, if the rear steering part 105 is pressed, the upper bracket 109 and the lower bracket 111 are separated from each other, and thus the main body part 101 can be folded to have a reduced volume for storage and be carried in the trunk of a vehicle, as shown in FIG. 4. When the guardian lifts the rear steering part 105 with the rear wheel part 130 supported to use the toddler bike, the main body part 101 is unfolded, the coupling pins 108 are inserted into the pin insertion holes 110, and the upper bracket 109 and the lower bracket 111 are coupled to each other, thereby making the bike prepared to be used, as shown in FIG. 2.

While FIGS. 2 and 4 illustrate that the seat part (180) is not mounted, the main body 101 can be folded for storage or unfolded for use with the seat unit 180 mounted on the rear steering part 105.

As described above, according to the present invention, by simply turning the regulation lever 157 in one direction or the opposite direction, the toddler can perform steering through the front steering part 170, or the function of a caster wheel capable of rotating freely can be implemented without the steering of the front steering part 170 transmitted to the front wheel part 120 such that the guardian can perform steering through the rear steering part 105. Therefore, user convenience may be enhanced.

In addition, according to the invention, the main body part 101 can be easily folded for storage when the toddler bike is not in use, and therefore the toddler bike can be carried in the trunk of a vehicle.

Further, according to the present invention, the front wheel part 120 comprising the front wheel cover part 150 can be easily separated by simply pressing the push portion 167c of the displacement prevention piece 167.

According to the present invention, the front wheel support frame 121 is inclined at a certain angle with respect to the front wheel coupling rod 103 and the pedal 126 is spaced apart from the center axis of the front wheel coupling rod 103. Therefore, the distance between the feet of the toddler and the pedal 125 can be adjusted by changing the position where the pair of pin members 154b is inserted into the pair of lifting/lowering button accommodation grooves 162.

That is, as shown in FIG. 1, when the distance between the feet of the toddler and the pedal 125 is set to be short, if the front wheel cover part 150 is rotated by 180 degrees to change the position where the pin members 154b are received in the lifting/lowering button accommodation grooves 162, the distance between the feet of the toddler and the pedal 125 can be adjusted to increase.

While the present invention has been particularly shown and described with reference to the preferred embodiments thereof, it is to be understood that the invention is not limited to the disclosed exemplary embodiments. It will be appreciated by those skilled in the art that numerous changes and modifications of the invention are possible without departing from the scope of the appended claims. Thus, it is intended that the present invention covers the modifications and variations of this invention provided they come within the scope of the appended claims and their equivalents.

### [Industrial Applicability]

The present invention relates to a toddler bike, and may be used in a baby goods industry.

## Claims

1. A toddler bike comprising:
a main body part (101) comprising a main body frame (102), a front wheel coupling rod (103) coupled to a front end of the main body frame (102), and a rear steering part (105) disposed at a rear end of the main body frame (102);
a front wheel part (120) disposed at a lower portion of the front wheel coupling rod (103);
a rear wheel part (130) having a pair of rear wheels (133) disposed at a rear lower portion of the main body part (101);
a front wheel cover part (150) coupled between the front wheel part (120) and the front wheel coupling rod (103);
a front steering part (170) disposed at an upper portion of the front wheel coupling rod (103) to control steering;
a steering regulation part (160) disposed between the front wheel cover part (150) and the lower portion of the front wheel coupling rod (103), arranged to be operatively connected according to steering of the front steering part (170), and configured to regulate transmission of the steering of the front steering part (170) to the front wheel part (120); and
a seat part (180) detachably coupled to the rear steering part (105),
wherein the front wheel part (120) comprises:
a front wheel (123);
a front wheel support frame (121) rotatably supporting the front wheel (123); and
a connecting shaft (127) protruding from an upper portion of the front wheel support frame (121) and having a ring-shaped groove (127a) formed along an outer circumference thereof,
wherein the front wheel cover part (150) comprises:
a cover body (151) fixed to an upper end of the front wheel support frame (121) to cover an upper portion of the front wheel part (120);
a steering connection rod (153) extending upward from the cover body (151), having a pair of button movement grooves (153a) vertically formed on both sides of an upper portion of an outer circumferential surface thereof, and arranged such that the connecting shaft (127) protrudes from an upper portion of the steering connection rod (153);
a pair of lifting/lowering buttons (154) inserted into the pair of button movement grooves (153a) and disposed to vertically movable;
a pair of elastic members (155) provided between a bottom surface of the pair of button movement grooves (153a) and a lower portion of the pair of lifting/lowering buttons (154) to elastically support the pair of lifting/lowering buttons (154);
**characterised in that** a switching lever (157) formed in a cylindrical shape so as to surround the upper portion of the outer circumferential surface of the steering connection rod (153), arranged to be rotatable with respect to the steering connection rod (153), and causing the pair of lifting/lowering buttons (154) to vertically move according to a rotation operation thereof such that an upper portion of the pair of lifting/lowering buttons (154) selectively protrudes from an upper portion of the steering connection rod (153); and
a cover plate (156) formed in a disk shape and coupled to an upper surface of the steering connection rod (153) to prevent the switching lever (157) from being displaced upward from the steering connection rod (153), the cover plate (156) allowing the connecting shaft (127) to protrude upward from a center thereof and being provided with a pair of through holes (156a) through which upper portions of the pair of lifting/lowering buttons (154) pass,
wherein the steering regulation part (160) comprises:
a cover coupling base (161) disposed in contact with an upper surface of the cover plate (156) and having a pair of lifting/lowering button accommodation grooves (162) into which the pair of lifting/lowering buttons (154) are raised and inserted; and
an insertion tube (163) extending upward from the cover coupling base (161) and coupled with the front steering part (170),
wherein, when the switching lever (157) is rotated in one direction, the pair of lifting/lowering buttons (154) is raised and inserted into the lifting/lowering button accommodation grooves (162) to restrict rotation of the front wheel cover part (150) with respect to the steering regulation part (160) such that the steering of the front steering part (170) is transmitted to the front wheel part (120),
wherein, when the switching lever (157) is rotated in an opposite direction, the pair of lifting/lowering buttons (154) is lowered and separated from the lifting/lowering button accommodation groove (162) such that the front wheel cover part (150) is released from restriction of rotation with respect to the steering regulation part (160) to be freely rotatable to allow steering of the rear steering part (105).

2. The toddler bike according to claim 1, wherein each of the lifting/lowering buttons (154) comprises:
a button body (154a) formed in a rectangular box shape and provided with inclined surfaces formed on both sides of an upper portion thereof, the button body (154a) being inserted into the button movement groove (153a) and vertically movable; and
a pin member (154b) vertically arranged through the button body (154a) and selectively inserted into the lifting/lowering button accommodation groove (162) according to vertical movement of the button body (154a),
wherein the switching lever (157) comprises:
a first guide groove (157a) formed in an inner circumferential surface thereof at a first height and allowing an upper side surface of the button body (154a) to be seated therein;
a second guide groove (157b) spaced a predetermined distance from the first guide groove (157a) formed in the inner circumferential surface of the switching lever (157) at a position lower than the first height; and
a sloped guide groove (157c) formed in the inner circumferential surface of the switching lever (157) to connect the first guide groove (157a) and the second guide groove (157b),
wherein, when the switching lever (157) is rotated in the one direction, the button body (154a) is guided from the second guide groove (157b) to the first guide groove (157a) along the sloped guide groove (157c) to rise such that the pin members (154b) are inserted into the lifting/lowering button accommodation grooves (162),
wherein, when the switch lever (157) is rotated in the opposite direction, the button body (154a) is guided from the first guide groove (157a) to the second guide groove (157b) along by the sloped guide groove (157c) to be lowered such that the pin members (154b) are released from the lifting/lowering button accommodation grooves (162).

3. The toddler bike according to claim 1, wherein an outer circumferential surface of the switching lever (157) is provided with an anti-slip projection (157e) for preventing slippage when rotated by a user.

4. The toddler bike according to claim 1, wherein the cover coupling base (161) and the insertion tube (163) are provided with a coupling shaft insertion hole (164) penetrating a center thereof,
wherein the steering regulation part (160) comprises:
an insertion slit (161a) formed to pass inward from an outer circumferential surface of the cover coupling base (161) through the connecting shaft insertion hole (164);
a displacement prevention piece (167) inserted into the insertion slit (161) so as to be movable forward and backward and provided with a locking hole (167a) entering into the coupling shaft insertion hole (164) according to forward or backward movement of the displacement prevention piece (167) and a spring accommodation hole (167b) spaced backward from the locking hole (167a) by a predetermined distance, a rear end of the displacement prevention piece (167) being provided with a push portion (167c) to be pushed by the user;
an elastic spring (168) formed in the spring accommodation hole (167b); and
a fixing member (169) formed to penetrate the cover coupling base (161) so as to protrude from a lower surface of the cover coupling base (161) into the spring accommodation hole (167b) to support one end of the elastic spring (168),
wherein, when the user does not apply external force to the push portion, a rim of the locking hole (167a) enters into the connecting shaft insertion hole (164) and is inserted into the ring-shaped groove (127a) of the connecting shaft (127) inserted into the connecting shaft insertion hole (164) such that the connecting shaft (127) is prevented from being displaced from the cover coupling base (161), and the front wheel cover part (150) is not separated from the steering regulation part (160), while the front wheel part (120) and the front wheel cover part (150) are rotatable about the connecting shaft (127) with respect to the steering regulation part (160),
wherein, when the user pushes the push portion, the rim of the locking hole (167a) does not enter into the connecting shaft insertion hole (164), and the connecting shaft (127) is separated from the connecting shaft insertion hole (164).

5. The toddler bike according to claim 1, wherein the rear wheel part (130) comprises:
a pair of rotation support members (131) installed to rotatably support the pair of rear wheels (133) inside each of the pair of rear wheels (133); and
a horizontal bar (135) connecting the pair of rotation support members (131) to each other,
wherein the main body part (101) further comprises:
a pair of first support frames (106) having a front end hinged to both sides of a lower portion of the rear steering part (105) and a rear end hinged to a front end portion of the pair of rotation support members (131);
a pair of second support frames (107) hinged to a rear end portion of the pair of first support frames (106);
an upper bracket (109) formed at a rear end of the main body frame (102) so as to be inclined and having an upper end coupled with a middle portion of a lower end of the rear steering part (105), the upper bracket (109) comprising a pair of coupling pins (108) projected and retracted through a lower portion thereof;
a lower bracket (111) hinged to a front end of the pair of second support frames (107) on both sides thereof and having a front surface provided with a pair of pin insertion holes (110) allowing the pair of coupling pins (108) to be inserted thereinto; and
a connecting piece (112) having opposite ends hinged to the upper bracket (109) and the lower bracket (111),
wherein, when the pair of coupling pins (108) is inserted into the pair of pin insertion holes (110) and the upper bracket (109) is coupled to the lower bracket (111), the rear steering part (105), the pair of first support frames (106), the pair of second support frames (107), the upper bracket (109), the lower bracket (111) and the connecting piece (112) are unfolded such that the main body part (101) is usable,
wherein, when the pair of coupling pins (108) is separated from the pair of pin insertion holes (110) and the upper bracket (109) is decoupled from the lower bracket (111), the rear steering part (105), the pair of first support frames (106), the pair of second support frames (107), the upper bracket (109), the lower bracket (111) and the connecting piece (112) are folded such that the main body part (101) has a reduced volume for storage compared to the usable state.

6. The toddler bike according to claim 5, wherein the main body part (101) further comprises:
a pair of pulling buttons (114) formed on both sides of an upper portion of the rear steering part (105) and arranged to be movable along the rear steering part (105);
a pair of wires (116) installed inside the upper bracket (109) and the rear steering part (105) to connect the pair of coupling pins (108) to the pair of pulling buttons (114); and
a pair of coil springs (117) installed inside the upper bracket 109 and configured to be compressed when the pair of coupling pins (108) are moved backward to provide elastic force for returning the pair of coupling pins (108) to original protruding positions.

7. The toddler bike according to claim 1, wherein the steering regulation part (160) is configured to rotate with respect to the front wheel coupling rod (103) within a limited rotation angle range such that a counterclockwise/clockwise steering angle range is limited by the front steering part (170).

## Patentansprüche

1. Kleinkindfahrrad, umfassend:
ein Hauptkörperteil (101), umfassend einen Hauptkörperrahmen (102), eine Vorderrad-Kuppelstange (103), die mit einem vorderen Ende des Hauptkörperrahmens (102) und einem hinteren Lenkungsteil (105), das an einem hinteren Ende des Hauptkörperrahmens (102) angeordnet ist, gekoppelt ist;
ein Vorderradteil (120), das an einem unteren Abschnitt der Vorderrad-Kuppelstange (103) angeordnet ist;
ein Hinterradteil (130), das ein Paar von Hinterrädern (133) aufweist, die an einem hinteren unteren Abschnitt des Hauptkörperteils (101) angeordnet sind;
ein Vorderrad-Abdeckungsteil (150), das zwischen dem Vorderradteil (120) und der Vorderrad-Kuppelstange (103) gekoppelt ist;
ein vorderes Lenkungsteil (170), das an einem oberen Abschnitt der Vorderrad-Kuppelstange (103) angeordnet ist, um die Lenkung zu steuern;
ein Lenkungsregulierungsteil (160), das zwischen dem Vorderrad-Abdeckungsteil (150) und dem unteren Abschnitt der Vorderrad-Kuppelstange (103) angeordnet ist, und positioniert ist, um betriebsmäßig gemäß der Lenkung des vorderen Lenkungsteils (170) verbunden zu werden, und das ausgelegt ist, um Übertragung der Lenkung des vorderen Lenkungsteils (170) auf das Vorderradteil (120) zu regulieren; und
ein Sitzteil (180), das abnehmbar mit dem hinteren Lenkungsteil (105) gekoppelt ist,
wobei das Vorderradteil (120) umfasst:
ein Vorderrad (123);
einen Vorderrad-Stützrahmen (121), der drehbar das Vorderrad (123) stützt; und
eine Verbindungswelle (127), die von einem oberen Abschnitt des Vorderrad-Stützrahmens (121) vorsteht und eine ringförmige Rille (127a) aufweist, die entlang eines Außenumfangs davon gebildet ist,
wobei das Vorderrad-Abdeckungsteil (150) umfasst:
einen Abdeckungskörper (151), der an einem oberen Ende des Vorderrad-Stützrahmens (121) befestigt ist, um einen oberen Abschnitt des Vorderradteils (120) abzudecken;
eine Lenkungsverbindungsstange (153), die sich von dem Abdeckungskörper (151) nach oben erstreckt, ein Paar von Knopfbewegungsrillen (153a) aufweist, die vertikal an beiden Seiten eines oberen Abschnitts einer Außenumfangsfläche davon gebildet sind und so positioniert sind, dass die Verbindungswelle (127) von einem oberen Abschnitt der Lenkungsverbindungsstange (153) vorsteht;
ein Paar von Knöpfen zum Anheben/Absenken (154), die in das Paar von Knopfbewegungsrillen (153a) eingeführt sind und angeordnet sind, um vertikal beweglich zu sein;
ein Paar von elastischen Elementen (155), die zwischen einer Bodenoberfläche des Paars von Knopfbewegungsrillen (153a) und einem unteren Abschnitt des Paars von Knöpfen zum Anheben/Absenken (154) bereitgestellt sind, um das Paar von Knöpfen zum Anheben/Absenken (154) elastisch zu stützen;
**dadurch gekennzeichnet, dass**
ein Schalthebel (157) in einer zylinderförmigen Form so gebildet ist, dass er den oberen Abschnitt der Außenumfangsfläche der Lenkungsverbindungsstange (153) einfasst, der positioniert ist, um in Bezug auf die Lenkungsverbindungsstange (153) drehbar zu sein, und verursacht, dass das Paar von Knöpfen zum Anheben/Absenken (154) sich gemäß einer Drehbetätigung davon vertikal so bewegt, dass ein oberer Abschnitt des Paars von Knöpfen zum Anheben/Absenken (154) wahlweise von einem oberen Abschnitt der Lenkungsverbindungsstange (153) vorsteht; und
eine Abdeckungsplatte (156), die in einer Scheibenform gebildet ist, und die mit einer oberen Oberfläche der Lenkungsverbindungsstange (153) gekoppelt ist, um zu verhindern, dass der Schalthebel (157) von der Lenkungsverbindungsstange (153) nach oben verschoben wird, wobei die Abdeckungsplatte (156) es der Verbindungswelle (127) erlaubt, von einer Mitte davon nach oben vorzustehen, und mit einem Paar von Durchgangslöchern (156a) bereitgestellt ist, durch die obere Abschnitte des Paars von Knöpfen zum Anheben/Absenken (154) durchgehen,
wobei das Lenkungsregulierungsteil (160) umfasst:
eine Abdeckungskupplungsbasis (161), die in Kontakt mit einer oberen Oberfläche der Abdeckungsplatte (156) angeordnet ist und ein Paar von Rillen zur Aufnahme eines Knopfs zum Anheben/Absenken (162) aufweist, in die das Paar von Knöpfen zum Anheben/Absenken (154) erhöht und eingeführt ist; und
ein Einführungsrohr (163), das sich von der Abdeckungskupplungsbasis (161) nach oben erstreckt und das mit dem vorderen Lenkungsteil (170) gekoppelt ist,
wobei, wenn der Schalthebel (157) in eine Richtung gedreht wird, das Paar von Knöpfen zum Anheben/Absenken (154) erhöht wird und in die Rillen zur Aufnahme eines Knopfs zum Anheben/Absenken (162) eingeführt wird, um Drehung des Vorderrad-Abdeckungsteils (150) in Bezug auf das Lenkungsregulierungsteil (160) so einzuschränken, dass die Lenkung des vorderen Lenkungsteils (170) auf das Vorderradteil (120) übertragen wird,
wobei, wenn der Schalthebel (157) in eine entgegengesetzte Richtung gedreht wird, das Paar von Knöpfen zum Anheben/Absenken (154) abgesenkt und von der Rille zur Aufnahme eines Knopfs zum Anheben/Absenken (162) getrennt wird, so dass das Vorderrad-Abdeckungsteil (150) von der Einschränkung der Drehung in Bezug auf das Lenkungsregulierungsteil (160) freigegeben wird, um frei drehbar zu sein, um Lenkung des hinteren Lenkungsteils (105) zu erlauben.

2. Kleinkindfahrrad nach Anspruch 1, wobei jeder der Knöpfe zum Anheben/Absenken (154) umfasst:
einen Knopfkörper (154a), der in einer rechteckigen Kastenform gebildet ist und mit an beiden Seiten eines oberen Abschnitt davon gebildeten geneigten Oberflächen bereitgestellt ist, wobei der Knopfkörper (154a) in die Knopfbewegungsrille (153a) eingeführt ist und vertikal beweglich ist; und
ein Stiftelement (154b), das vertikal durch den Knopfkörper (154a) positioniert ist und wahlweise in die Rille zur Aufnahme eines Knopfs zum Anheben/Absenken (162) gemäß vertikaler Bewegung des Knopfkörpers (154a) eingeführt wird,
wobei der Schalthebel (157) umfasst:
eine erste Führungsrille (157a), die an einer Innenumfangsoberfläche davon an einer ersten Höhe gebildet ist und es erlaubt, dass eine obere Seitenoberfläche des Knopfkörpers (154a) darin gesetzt wird;
eine zweite Führungsrille (157b), die in einem vorbestimmten Abstand von der ersten Führungsrille (157a) beabstandet ist, die an der Innenumfangsoberfläche des Schalthebels (157) an einer niedrigeren Position als die erste Höhe gebildet ist; und
eine abgeschrägte Führungsrille (157c), die an der Innenumfangsoberfläche des Schalthebels (157) gebildet ist, um die erste Führungsrille (157a) und die zweite Führungsrille (157b) zu verbinden,
wobei, wenn der Schalthebel (157) in die eine Richtung gedreht wird, der Knopfkörper (154a) von der zweiten Führungsrille (157b) zur ersten Führungsrille (157a) entlang der abgeschrägten Führungsrille (157c) geführt wird, um so anzuheben, dass die Stiftelemente (154b) in die Rillen zur Aufnahme eines Knopfs zum Anheben/Absenken (162) eingeführt werden,
wobei, wenn der Schalthebel (157) in die entgegengesetzte Richtung gedreht wird, der Knopfkörper (154a) von der ersten Führungsrille (157a) zur zweiten Führungsrille (157b) entlang der abgeschrägten Führungsrille (157c) geführt wird, um so abgesenkt zu werden, dass die Stiftelemente (154b) von den Rillen zur Aufnahme eines Knopfs zum Anheben/Absenken (162) freigegeben werden.

3. Kleinkindfahrrad nach Anspruch 1, wobei eine Außenumfangsfläche des Schalthebels (157) mit einem Rutschschutz (157e) zum Verhindern von Schlupf, wenn er von einem Benutzer gedreht wird, bereitgestellt ist.

4. Kleinkindfahrrad nach Anspruch 1, wobei die Abdeckungskupplungsbasis (161) und das Einführungsrohr (163) mit einem Kupplungswellen-Einführungsloch (164), das eine Mitte davon durchdringt, bereitgestellt sind,
wobei das Lenkungsregulierungsteil (160) umfasst:
einen Einführungsschlitz (161a), der gebildet ist, um von einer Außenumfangsfläche der Abdeckungskupplungsbasis (161) durch das Verbindungswellen-Einführungsloch (164) nach innen durchzugehen;
ein Teil zur Verhinderung von Verlagerung (167), das in den Einführungsschlitz (161) so eingeführt ist, dass es nach vorne und nach hinten beweglich ist, und mit einem Verriegelungsloch (167a), das gemäß einer Bewegung des Teils zur Verhinderung von Verlagerung (167) nach vorne oder nach hinten in das Kupplungswellen-Einführungsloch (164) eintritt, und einem Loch zur Aufnahme einer Feder (167b), das nach hinten vom Verriegelungsloch (167a) um einen vorbestimmten Abstand beabstandet ist, bereitgestellt ist, wobei ein hinteres Ende des Teils zur Verhinderung von Verlagerung (167) mit einem Drückabschnitt (167c), der vom Benutzer gedrückt werden soll, bereitgestellt ist;
eine elastische Feder (168), die im Loch zur Aufnahme einer Feder (167b) gebildet ist; und
ein Befestigungselement (169), das gebildet ist, um durch die Abdeckungskupplungsbasis (161) so durchzudringen, dass es von einer unteren Oberfläche der Abdeckungskupplungsbasis (161) in das Loch zur Aufnahme einer Feder (167b) vorsteht, um ein Ende der elastischen Feder (168) zu stützen,
wobei, wenn der Benutzer keine externe Kraft auf den Drückabschnitt anwendet, ein Rand des Verriegelungslochs (167a) in das Verbindungswellen-Einführungsloch (164) eintritt und in die ringförmige Rille (127a) der Verbindungswelle (127) eingeführt wird, in das Verbindungswellen-Einführungsloch (164) so eingeführt wird, dass verhindert wird, dass die Verbindungswelle (127) von der Abdeckungskupplungsbasis (161) verschoben wird, und das Vorderrad-Abdeckungsteil (150) nicht von dem Lenkungsregulierungsteil (160) getrennt wird, während das Vorderradteil (120) und das Vorderrad-Abdeckungsteil (150) um die Verbindungswelle (127) in Bezug auf das Lenkungsregulierungsteil (160) drehbar sind,
wobei, wenn der Benutzer den Drückabschnitt drückt, der Rand des Verriegelungslochs (167a) nicht in das Verbindungswellen-Einführungsloch (164) eintritt, und die Verbindungswelle (127) von dem Verbindungswellen-Einführungsloch (164) getrennt wird.

5. Kleinkindfahrrad nach Anspruch 1, wobei das Hinterradteil (130) umfasst:
ein Paar von Elementen zur Drehstützung (131), die installiert sind, um das Paar von Hinterrädern (133) innerhalb jedes des Paars von Hinterrädern (133) drehbar zu stützen; und
eine horizontale Stange (135), die das Paar von Elementen zur Drehstützung (131) untereinander verbindet,
wobei der Hauptkörperteil (101) weiter umfasst:
ein Paar von ersten Stützrahmen (106), die ein vorderes Ende aufweisen, das an beiden Seiten eines unteren Abschnitts des hinteren Lenkungsteils (105) klappbar angebracht ist, und an einem hinteren Ende an einen vorderen Endabschnitt des Paars von Elementen zur Drehstützung (131) klappbar angebracht ist;
ein Paar von zweiten Stützrahmen (107), die an einem hinteren Endabschnitt des Paars von ersten Stützrahmen (106) klappbar angebracht sind;
einen oberen Träger (109), der an einem hinteren Ende des Hauptkörperrahmens (102) so gebildet ist, um geneigt zu sein, und der ein oberes Ende aufweist, das mit einem mittleren Abschnitt eines unteren Endes des hinteren Lenkungsteils (105) gekoppelt ist, wobei der obere Träger (109) ein Paar von Kupplungsstiften (108) umfasst, die durch einen unteren Abschnitt davon vorgeschoben und zurückgezogen werden;
einen unteren Träger (111), der klappbar an einem vorderen Ende des Paars von zweiten Stützrahmen (107) an beiden Seiten davon angebracht ist und eine vordere Oberfläche aufweist, die mit einem Paar von Stifteinführungslöchern (110) bereitgestellt ist, die es erlauben, dass das Paar von Kupplungsstiften (108) darin eingeführt wird; und
ein Verbindungsstück (112), das entgegengesetzte Enden aufweist, die am oberen Träger (109) und am unteren Träger (111) klappbar angebracht sind,
wobei, wenn das Paar von Kupplungsstiften (108) in das Paar von Stifteinführungslöchern (110) eingeführt ist, und der obere Träger (109) mit dem unteren Träger (111) gekoppelt ist, das hintere Lenkungsteil (105), das Paar von ersten Stützrahmen (106), das Paar von zweiten Stützrahmen (107), der obere Träger (109), der untere Träger (111) und das Verbindungsstück (112) so auseinandergeklappt sind, dass das Hauptkörperteil (101) benutzbar ist,
wobei, wenn das Paar von Kupplungsstiften (108) vom Paar von Stifteinführungslöchern (110) getrennt ist, und der obere Träger (109) vom unteren Träger (111) entkoppelt ist, das hintere Lenkungsteil (105), das Paar von ersten Stützrahmen (106), das Paar von zweiten Stützrahmen (107), der obere Träger (109), der untere Träger (111) und das Verbindungsstück (112) so zusammengeklappt sind, dass der Hauptkörperteil (101) im Vergleich zum benutzbaren Zustand ein verringertes Volumen zum Speichern aufweist.

6. Kleinkindfahrrad nach Anspruch 5, wobei das Hauptkörperteil (101) weiter umfasst:
ein Paar von Ziehknöpfen (114), die an beiden Seiten eines oberen Abschnitts des hinteren Lenkungsteils (105) gebildet sind und positioniert sind, um entlang des hinteren Lenkungsteils (105) beweglich zu sein;
ein Paar von Kabeln (116), die innerhalb des oberen Trägers (109) und des hinteren Lenkungsteils (105) installiert sind, um das Paar von Kupplungsstiften (108) mit dem Paar von Ziehknöpfen (114) zu verbinden; und
ein Paar von Spiralfedern (117), die innerhalb des oberen Trägers (109) installiert sind und ausgelegt sind, um zusammengedrückt zu werden, wenn das Paar von Kupplungsstiften (108) nach hinten bewegt wird, um elastische Kraft zum Zurückkehren des Paars von Kupplungsstiften (108) in ursprüngliche vorstehende Positionen bereitzustellen.

7. Kleinkindfahrrad nach Anspruch 1, wobei das Lenkungsregulierungsteil (160) ausgelegt ist, um in Bezug auf die Vorderrad-Kuppelstange (103) innerhalb eines begrenzten Drehwinkelbereichs so zu drehen, das der Lenkungswinkelbereich im Uhrzeigersinn / gegen den Uhrzeigersinn durch das vordere Lenkungsteil (170) eingeschränkt wird.

## Revendications

1. Vélo pour tout-petit comprenant :
une partie de corps principal (101) comprenant un cadre de corps principal (102), une barre d'attelage de roue avant (103) couplée à une extrémité avant du cadre de corps principal (102), et une partie de direction arrière (105) disposée à une extrémité arrière du cadre de corps principal (102) ;
une partie de roue avant (120) disposée sur une portion inférieure de la barre d'attelage de roue avant (103) ;
une partie de roue arrière (130) présentant une paire de roues arrière (133) disposées sur une portion inférieure arrière de la partie de corps principal (101) ;
une partie de couvercle de roue avant (150) couplée entre la partie de roue avant (120) et la barre d'attelage de roue avant (103) ;
une partie de direction avant (170) disposée sur une portion supérieure de la barre d'attelage de roue avant (103) pour commander la direction ;
une partie de régulation de direction (160) disposée entre la partie de couvercle de roue avant (150) et la portion inférieure de la barre d'attelage de roue avant (103), agencée pour être raccordée en fonctionnement selon la direction de la partie de direction avant (170), et configurée pour réguler la transmission de la direction de la partie de direction avant (170) à la partie de roue avant (120) ; et
une partie de siège (180) couplée de manière détachable à la partie de direction arrière (105),
dans lequel la partie de roue avant (120) comprend :
une roue avant (123) ;
un cadre de support de roue avant (121) supportant de manière rotative la roue avant (123) ; et
un arbre de raccordement (127) faisant saillie d'une portion supérieure du cadre de support de roue avant (121) et présentant une rainure annulaire (127a) formée le long d'une circonférence extérieure de celui-ci,
dans lequel la partie de couvercle de roue avant (150) comprend :
un corps de couvercle (151) fixé à une extrémité supérieure du cadre de support de roue avant (121) pour couvrir une portion supérieure de la partie de roue avant(120) ;
une tige de raccordement de direction (153) s'étendant vers le haut depuis le corps de couvercle (151), présentant une paire de rainures de mouvement de bouton (153a) formées verticalement sur les deux côtés d'une portion supérieure d'une surface circonférentielle extérieure de celle-ci, et agencée de sorte que l'arbre de raccordement (127) fasse saillie d'une portion supérieure de la tige de raccordement de direction (153) ;
une paire de boutons de levage/d'abaissement (154) insérés dans la paire de rainures de mouvement de bouton (153a) et disposés pour pouvoir se déplacer verticalement ;
une paire d'éléments élastiques (155) prévus entre une surface inférieure de la paire de rainures de mouvement de bouton (153a) et une portion inférieure de la paire de boutons de levage/d'abaissement (154) pour supporter élastiquement la paire de boutons de levage/d'abaissement (154) ;
**caractérisé en ce que**
un levier de commutation (157) formé en une forme cylindrique de sorte à entourer la portion supérieure de la surface circonférentielle extérieure de la tige de raccordement de direction (153), agencé pour être rotatif par rapport à la tige de raccordement de direction (153), et amenant la paire de boutons de levage/d'abaissement (154) à se déplacer verticalement selon une opération de rotation de celui-ci de sorte qu'une portion supérieure de la paire de boutons de levage/d'abaissement (154) fasse saillie sélectivement d'une portion supérieure de la tige de raccordement de direction (153) ; et
une plaque de couvercle (156) formée en une forme de disque et couplée à une surface supérieure de la tige de raccordement de direction (153) pour empêcher le levier de commutation (157) d'être déplacé vers le haut depuis la tige de raccordement de direction (153), la plaque de couvercle (156) permettant à l'arbre de raccordement (127) de faire saillie vers le haut depuis un centre de celle-ci et étant dotée d'une paire de trous débouchants (156a) au travers desquels des portions supérieures de la paire de boutons de levage/d'abaissement (154) passent,
dans lequel la partie de régulation de direction (160) comprend :
une base de couplage de couvercle (161) disposée en contact avec une surface supérieure de la plaque de couvercle (156) et présentant une paire de rainures de logement de bouton de levage/d'abaissement (162) dans lesquelles la paire de boutons de levage/d'abaissement (154) est relevée et insérée ; et
un tube d'insertion (163) s'étendant vers le haut depuis la base de couplage de couvercle (161) et couplé avec la partie de direction avant (170),
dans lequel, lorsque le levier de commutation (157) est tourné dans une direction, la paire de boutons de levage/d'abaissement (154) est relevée et insérée dans les rainures de logement de bouton de levage/d'abaissement (162) pour restreindre la rotation de la partie de couvercle de roue avant (150) par rapport à la partie de régulation de direction (160) de sorte que la direction de la partie de direction avant (170) soit transmise à la partie de roue avant (120),
dans lequel, lorsque le levier de commutation (157) est tourné dans une direction opposée, la paire de boutons de levage/d'abaissement (154) est abaissée et séparée de la rainure de logement de bouton de levage/d'abaissement (162) de sorte que la partie de couvercle de roue avant (150) soit libérée de la restriction de rotation par rapport à la partie de régulation de direction (160) pour être librement rotative afin de permettre la direction de la partie de direction arrière (105).

2. Vélo pour tout-petit selon la revendication 1, dans lequel chacun des boutons de levage/d'abaissement (154) comprend :
un corps de bouton (154a) formé en une forme de boîte rectangulaire et doté de surfaces inclinées formées sur les deux côtés d'une portion supérieure de celui-ci, le corps de bouton (154a) étant inséré dans la rainure de mouvement de bouton (153a) et mobile verticalement ; et
un élément de broche (154b) agencé verticalement au travers du corps de bouton (154a) et inséré sélectivement dans la rainure de logement de bouton de levage/d'abaissement (162) selon le mouvement vertical du corps de bouton (154a),
dans lequel le levier de commutation (157) comprend :
une première rainure de guidage (157a) formée dans une surface circonférentielle intérieure de celle-ci à une première hauteur et permettant à une surface latérale supérieure du corps de bouton (154a) d'être logée dedans ;
une seconde rainure de guidage (157b) espacée à une distance prédéterminée de la première rainure de guidage (157a) formée dans la surface circonférentielle intérieure du levier de commutation (157) sur une position inférieure à la première hauteur ; et
une rainure de guidage pentue (157c) formée dans la surface circonférentielle intérieure du levier de commutation (157) pour raccorder la première rainure de guidage (157a) et la seconde rainure de guidage (157b),
dans lequel, lorsque le levier de commutation (157) est tourné dans l'une direction, le corps de bouton (154a) est guidé de la seconde rainure de guidage (157b) à la première rainure de guidage (157a) le long de la rainure de guidage pentue (157c) pour s'élever de sorte que les éléments de broche (154b) soient insérés dans les rainures de logement de bouton de levage/d'abaissement (162),
dans lequel, lorsque le levier de commutation (157) est tourné dans la direction opposée, le corps de bouton (154a) est guidé de la première rainure de guidage (157a) à la seconde rainure de guidage (157b) le long de la rainure de guidage pentue (157c) pour être abaissé de sorte que les éléments de broche (154b) soient libérés des rainures de logement de bouton de levage/d'abaissement (162).

3. Vélo pour tout-petit selon la revendication 1, dans lequel une surface circonférentielle extérieure du levier de commutation (157) est dotée d'une projection antidérapante (157e) pour empêcher le glissement lorsqu'il est tourné par un utilisateur.

4. Vélo pour tout-petit selon la revendication 1, dans lequel la base de couplage de couvercle (161) et le tube d'insertion (163) sont dotés d'un trou d'insertion d'arbre de couplage (164) pénétrant un centre de ceux-ci,
dans lequel la partie de régulation de direction (160) comprend :
une fente d'insertion (161a) formée pour passer vers l'intérieur depuis une surface circonférentielle extérieure de la base de couplage de couvercle (161) au travers du trou d'insertion d'arbre de raccordement (164) ;
une pièce d'empêchement de déplacement (167) insérée dans le fente d'insertion (161) de sorte à être mobile vers l'avant et vers l'arrière et dotée d'un trou de verrouillage (167a) entrant dans le trou d'insertion d'arbre de couplage (164) selon le mouvement vers l'avant ou l'arrière de la pièce d'empêchement de déplacement (167) et un trou de logement de ressort (167b) espacé vers l'arrière depuis le trou de verrouillage (167a) d'une distance prédéterminée, une extrémité arrière de la pièce d'empêchement de déplacement (167) étant dotée d'une portion de poussée (167c) à pousser par l'utilisateur ;
un ressort élastique (168) formé dans le trou de logement de ressort (167b) ; et
un élément de fixation (169) formé pour pénétrer la base de couplage de couvercle (161) de sorte à faire saillie d'une surface inférieure de la base de couplage de couvercle (161) dans le trou de logement de ressort (167b) pour supporter une extrémité du ressort élastique (168),
dans lequel, lorsque l'utilisateur n'applique pas de force externe à la portion de poussée, un bord du trou de verrouillage (167a) entre dans le trou d'insertion d'arbre de raccordement (164) et est inséré dans la rainure annulaire (127a) de l'arbre de raccordement (127) inséré dans le trou d'insertion d'arbre de raccordement (164) de sorte que l'arbre de raccordement (127) soit empêché d'être déplacé de la base de couplage de couvercle (161), et la partie de couvercle de roue avant (150) n'est pas séparée de la partie de régulation de direction (160) alors que la partie de roue avant (120) et la partie de couvercle de roue avant (150) sont rotatives autour de l'arbre de raccordement (127) par rapport à la partie de régulation de direction (160),
dans lequel, lorsque l'utilisateur pousse la portion de poussée, le bord du trou de verrouillage (167a) n'entre pas dans le trou d'insertion d'arbre de raccordement (164), et l'arbre de raccordement (127) est séparé du trou d'insertion d'arbre de raccordement (164).

5. Vélo pour tout-petit selon la revendication 1, dans lequel la partie de roue arrière (130) comprend :
une paire d'éléments de support de rotation (131) installés pour supporter de manière rotative la paire de roues arrière (133) à l'intérieur de chacune de la paire de roues arrière (133) ; et
une barre horizontale (135) raccordant la paire d'éléments de support de rotation (131) l'un à l'autre,
dans lequel la partie de corps principal (101) comprend en outre :
une paire de premiers cadres de support (106) présentant une extrémité avant articulée aux deux côtés d'une portion inférieure de la partie de direction arrière (105) et une extrémité arrière articulée à une portion d'extrémité avant de la paire d'éléments de support de rotation (131) ;
une paire de seconds cadres de support (107) articulés à une portion d'extrémité arrière de la paire de premiers cadres de support (106) ;
un support supérieur (109) formé à une extrémité arrière du cadre de corps principal (102) de sorte à être incliné et présentant une extrémité supérieure couplée à une portion médiane d'une extrémité inférieure de la partie de direction arrière (105), le support supérieur (109) comprenant une paire de broches de couplage (108) projetées et rétractées au travers d'une portion inférieure de celui-ci ;
un support inférieur (111) articulé à une extrémité avant de la paire de seconds cadres de support (107) sur les deux côtés de celui-ci et présentant une surface avant dotée d'une paire de trous d'insertion de broche (110) permettant à la paire de broches de couplage (108) d'être insérée dedans ; et
une pièce de raccordement (112) présentant des extrémités opposées articulées au support supérieur (109) et au support inférieur (111),
dans lequel, lorsque la paire de broches de couplage (108) est insérée dans la paire de trous d'insertion de broche (110) et le support supérieur (109) est couplé au support inférieur (111), la partie de direction arrière (105), la paire de premiers cadres de support (106), la paire de seconds cadres de support (107), le support supérieur (109), le support inférieur (111) et la pièce de raccordement (112) sont dépliés de sorte que la partie de corps principal (101) soit utilisable,
dans lequel, lorsque la paire de broches de couplage (108) est séparée de la paire de trous d'insertion de broche (110) et le support supérieur (109) est découplé du support inférieur (111), la partie de direction arrière (105), la paire de premiers cadres de support (106), la paire de seconds cadres de support (107), le support supérieur (109), le support inférieur (111) et la pièce de raccordement (112) sont pliés de sorte que la partie de corps principal (101) présente un volume réduit pour le stockage par rapport à l'état utilisable.

6. Vélo pour tout-petit selon la revendication 5, dans lequel la partie de corps principal (101) comprend en outre :
une paire de boutons à tirer (114) formés sur les deux côtés d'une portion supérieure de la partie de direction arrière (105) et agencés pour être mobiles le long de la partie de direction arrière (105) ;
une paire de fils (116) installés à l'intérieur du support supérieur (109) et la partie de direction arrière (105) pour raccorder la paire de broches de couplage (108) à la paire de boutons à tirer (114) ; et
une paire de ressorts à boudin (117) installés à l'intérieur du support supérieur (109) et configurés pour être compressés lorsque la paire de broches de couplage (108) est déplacée vers l'arrière pour fournir une force élastique pour le retour de la paire de broches de couplage (108) à des positions en saillie originales.

7. Vélo pour tout-petit selon la revendication 1, dans lequel la partie de régulation de direction (160) est configurée pour tourner par rapport à la barre d'attelage de roue avant (103) dans une plage d'angle de rotation limitée de sorte qu'une plage d'angle de direction dans le sens horaire/antihoraire soit limitée par la partie de direction avant (170).
